# EUROPÄISCHE PATENTANMELDUNG

(11) **EP 0 909 948 A2**
(43) Veröffentlichungstag der Anmeldung: **21.04.1999**
(21) Anmeldenummer: 98115953.6
(22) Anmeldetag: 25.08.1998
(51) Int. Cl.: G01N 21/89

(54) **Verfahren zum Überprüfen von Hartholzoberflächen auf Risse**

(30) Priorität: 17.10.1997 DE 19745910
(71) Anmelder: STN ATLAS Elektronik GmbH, 28309 Bremen (DE)
(72) Erfinder: Hillmer, Lothar, 27318 Hilgermissen (DE); Vilmar, Gordian, 28211 Bremen (DE)

(57) **Zusammenfassung**

Bei einem Verfahren zur Überprüfung von Hartholzoberflächen auf Risse, insbesondere Haarrisse, wird zwecks sicherer und unzweideutiger Erkennung der Risse durch zerstörungsfreie Prüfung auf der Holzoberfläche (10) ein langgestreckter, schmaler erster Abschnitt (12) beleuchtet und ein parallel dazu in einem geringen Abstand (a) sich erstreckender langgestreckter, schmaler, unbeleuchteter zweiter Abschnitt (13) auf Licht überwacht. Die beiden Abschnitte (12, 13) werden in räumlich starrer Zuordnung quer zu ihrer Erstreckungsrichtung über die Holzoberfläche (10) hinweggeführt und das Erfassen von Licht im zweiten Abschnitt (13) als Vorhandensein von Rissen gewertet.

## Beschreibung

Die Erfindung betrifft ein Verfahren zur Überprüfung von Hartholzoberflächen auf Risse, insbesondere Haarrisse.

Risse und Haarrisse in Holz, beispielsweise in Hartholz-Parkettstäben, haben qualitätsentscheidende Bedeutung. Bei der qualitätssichernden Sortierung der Produktion eines Holzverarbeiters ist daher die zerstörungsfreie Erkenntnis von Rissen im Holzprodukt von größter Wichtigkeit, da diese im Gegensatz zu anderen Holzdefekten nicht das Aussehen, sondern die elementare Funktion und Eigenschaft des Holzproduktes negativ beeinflussen.

Bei einem bekannten Verfahren zur Detektion von Rissen in Holzoberflächen (Lappalainen, T.:"Automated Image Analysis Method for the detection of Cracks on Wood Surface", Valtion Teknillinen Tutkimuskeskus, Espoo, Finland, Jan. 1992) werden mittels einer monochromen CCD-Matrixkamera zweidimensionale, digitale Bilder der Holzoberfläche fortlaufend aufgenommen und mittels einer automatischen Analysemethode ausgewertet. Die Risse sind dabei als verdunkelte, nur wenig Bildpunkte breite Strukturen im Digitalbild zu erkennen. Allerdings lassen sich die Risse nicht sicher von dunklen Fehlerstellen, Teile der Maserung oder anderen dunklen Holzfehlern unterscheiden, so daß bei einem Sortierkriterium mit der Forderung nach Rißfreiheit dieses Verfahren nicht einsetzbar ist.

Der Erfindung liegt die Aufgabe zugrunde, ein Verfahren der eingangs genannten Art und einer Vorrichtung hierzu anzugeben, das bzw. die durch zerstörungsfreie Prüfung Risse und Haarrisse in Harthölzern sicher und unzweideutig erkennt und damit eine qualitätssichernde Sortierung von Holzprodukten ermöglicht.

Die Aufgabe ist bei einem Verfahren der im Oberbegriff des Anspruchs 1 bzw. einer Vorrichtung der im Oberbegriff des Anspruchs 9 jeweils angegebenen Gattung erfindungsgemäß durch die Merkmale im Kennzeichenteil des Anspruchs 1 bzw. des Anspruchs 9 gelöst.

Das erfindungsgemäße Verfahren bzw. die erfindungsgemäße Vorrichtung hat den Vorteil, daß beim Hinwegführen der beiden Abschnitte über die Holzoberfläche die Risse im Bereich des ersten Abschnitts ausgeleuchtet werden. Das in den Riß eindringende Licht wird hier mehrfach reflektiert und gelangt dadurch in den auf Licht überwachten zweiten Abschnitt, in den hinein sich der Riß erstreckt. Damit wird der Riß im zweiten Abschnitt einwandfrei erkannt, und Störungen durch Erscheinungen, die einem Riß visuell gleichen, aber kein Riß sind, werden ausgeschlossen; denn diese Erscheinungen bleiben im zweiten Abschnitt dunkel, da sie nicht in der Lage sind, ihrerseits Licht bis in den zweiten Abschnitt weiterzuleiten. Mit dem erfindungsgemäßen Verfahren bzw. der erfindungsgemäßen Vorrichtung werden damit selbst kleinste Haarrisse noch erkannt, die bereits einen qualitätsmindernden Einfluß auf das Holzprodukt z.B. einem Parkettstab, haben, da sie z.B. den Parkettstab unter Belastung brechen oder durch Aufnahme von Feuchtigkeit und Flüssigkeiten aufquellen lassen. Damit ist dem Holzprodukthersteller ein zuverlässiges Verfahren bzw. eine zuverlässige Vorrichtung an die Hand gegeben, eine qualitässichernde Sortierung seiner Produkte speziell auf Rißbildung automatisch durchzuführen, wobei nicht nur eine Sortierung "Risse/keine Risse" sondern auch noch eine Qualitätsabstufung entsprechend der Häufigkeit der Risse pro Oberflächeneinheit vorgenommen werden kann.

Zweckmäßige Ausgestaltungen und Weiterbildungen des erfindungsgemäßen Verfahrens sind in den weiteren Ansprüchen 1 bis 8 angegeben. Zweckmäßige Ausführungsformen der erfindungsgemäßen Vorrichtung mit vorteilhaften Weiterbildungen und Ausgestaltungen der Erfindung finden sich in den Ansprüchen 10 und 11.

Die Erfindung ist anhand eines in der Zeichnung dargestellten Ausführungsbeispiels einer Vorrichtung zur Detektion von Rissen in Holzoberflächen im folgenden näher beschrieben. Es zeigen jeweils in schematischer Darstellung:
- Fig.1: eine Seitenansicht einer Vorrichtung zur Überprüfung von Hartholzoberflächen auf Risse,
- Fig.2: eine Draufsicht auf Transportband mit Prüfling der Vorrichtung in Fig.1.

Das vorgestellte Verfahren zur Überprüfung von Hartholzoberflächen auf Risse, insbesondere Haarrisse arbeitet nach folgendem Grundprinzip:

Auf der Holzoberfläche 10 eines Hartholzprüflings 11, z.B. eines Parkettstabes oder eines Paketes aneinanderliegender, einzelner Parkettstäbe, wird ein langgestreckter, schmaler, erster Abschnitt 12 beleuchtet und ein parallel dazu im geringen Abstand sich erstreckender langgestreckter, schmaler, unbeleuchteter zweiter Abschnitt 13 auf Licht überwacht. Die beiden Abschnitte 12, 13 sind dabei so ausgerichtet, daß sie sich quer zur Hauptmaserung der Holzoberfläche 10 erstrecken. Der Abstand a zwischen den beiden Abständen 12, 13 ist minimiert und so festgelegt, daß bei ungestörter Holzoberfläche, also bei Rißfreiheit des beleuchteten ersten Abschnitts 12, kein Licht in den unbeleuchteten zweiten Abschnitt 13 fällt. In einem realistischen Ausführungsbeispiel des Verfahrens beträgt der Abstand a zwischen den beiden Abschnitten 12, 13 typischerweise etwa 1 mm. Die beiden Abschnitte 12, 13 werden in räumlich starrer Zuordnung quer zu ihrer Erstreckungsrichtung über die Holzoberfläche 10 hinweggeführt und das Erfassen von Licht im zweiten Abschnitt 13 als Vorhandensein von Rissen gewertet. Zum Hinwegführen der beiden Abschnitte 12, 13 über die Holzoberfläche 10 wird bevorzugt die Holzoberfläche 10, also der Hartholzprüfling 11, relativ zur räumlich festen Anordnung der beiden Abschnitte 12, 13 kontinuierlich verschoben.

Der erste Abschnitt 12 wird durch die Projektion eines Lichtstrichs 14 auf die Holzoberfläche 10 erzeugt, während der zweite Abschnitt von dem Empfangsfeld 15 eines lichtempfindlichen Zeilendetektors gebildet wird. Unterteilt man das Empfangsfeld 15 noch in eine Mehrzahl von nebeneinanderliegenden Empfangszellen, die selektiv auf Licht überwacht werden, so kann nicht nur das Vorhandensein von Rissen, sondern auch die Anzahl der jeweils mit dem Lichtstrich 14 beleuchteten Risse festgestellt werden.

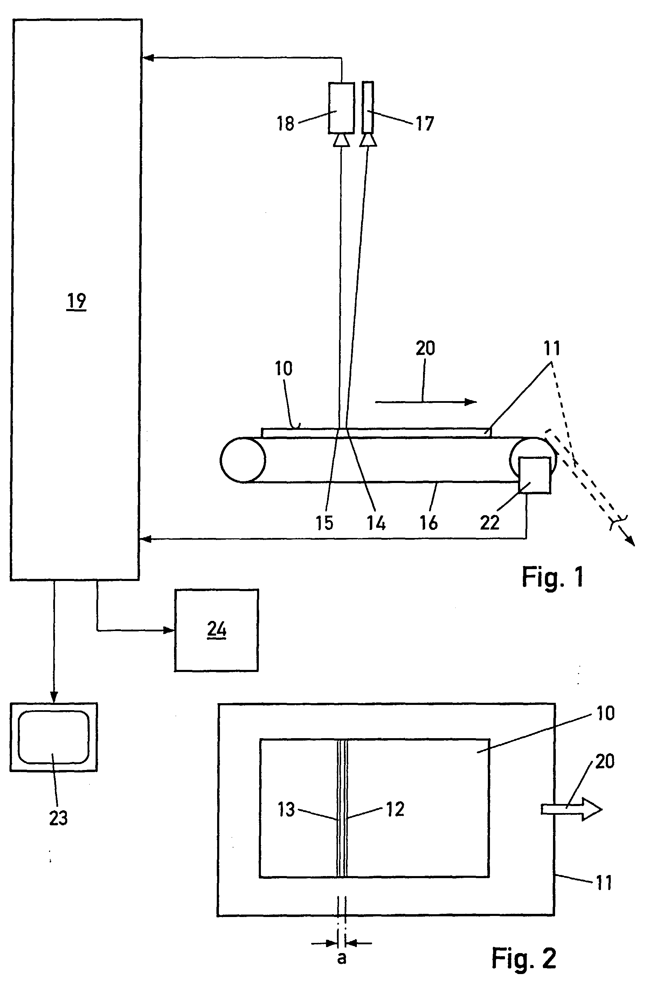

Die in Fig.1 schematisch in Seitenansicht skizzierte Vorrichtung zur Durchführung des vorstehend erläuterten Verfahrens weist ein vorzugsweise kontinuierlich angetriebenes Transportband 16 zur Auflage der Hartholzprüflinge 11, eine Laserlichtquelle 17, eine Zeilenkamera 18 und eine Bildverarbeitungseinheit 19 auf. Die Laserlichtquelle 17 projiziert einen quer zur Transportrichtung 20 des Transportbandes 16 sich erstreckenden Laserstrich, der den Lichtstrich 14 ergibt, auf das Transportband 16 und damit auf die Oberfläche 10 des Hartholzprüflings 11, wobei die Laserlichtquelle 17 einen gebündelten Laserstrahl erzeugt, der mittels einer Zylinderlinse oder eines Kollimators in der Ebene quer zur Transportrichtung 20 des Transportbandes 16 aufgeweitet wird. Die hochauflösende Zeilenkamera 18 spannt auf dem Transportband 16 das Empfangsfeld 15 auf, das dem ersten Abschnitt 13 entspricht. Am Transportband 16 ist noch ein Weggeber 22 vorgesehen, der der Bildverarbeitungseinheit 19 für den Verschiebeweg des Transportbands 16 charakteristische Ausgangssignale zuführt. Die Ausgangssignale der Zeilenkamera 18 sind ebenfalls der Bildverarbeitungseinheit 19 zugeführt.

Wenn nunmehr ein auf dem Transportband 16 liegender Hartholzprüfling 11 an der Anordnung von Laserlichtquelle 17 und Zeilenkamera 18 vorzugsweise kontinuierlich vorbeigeführt wird, so wandern der von der Laserlichtquelle 17 projizierte Laserlichtstrich 14 und das von der Zeilenkamera 18 aufgespannte Empfangsfeld 15 im festen Abstand a zueinander allmählich über die gesamte Holzoberfläche 10 hinweg. Gerät dabei mindestens ein Riß in der Holzoberfläche 10 in den Laserlichtstrich 14, so tritt im Empfangsfeld 15 der Zeilenkamera 18 Licht auf, das von der Zeilenkamera 18 aufgenommen wird. Die Bildsignale der Zeilenkamera 18 ergeben zusammengesetzt mit den Ausgangssignalen des Weggebers 22 ein einwandfreies Abbild der Rißverteilung über die Holzoberfläche 10. Die Bestimmung der Anzahl und der Länge der Risse in dem von der Bildverarbeitungseinheit 19 erzeugten digitalen Bild ist problemlos möglich und wird von der Bildverarbeitungseinheit 19 automatisch ausgeworfen und kann in einem Display 23 angezeigt werden. Gleichzeitig kann die Bildverarbeitungseinheit 19 auch ein Sortiersignal erzeugen, das einer Sortiereinrichtung 24 zugeführt wird, die den geprüften Hartholzprüfling 11 entsprechend der Anzahl der festgestellten Risse pro Flächeneinheit in eine von vorgegebenen Qualitätsstufen einordnet.

## Patentansprüche

1. Verfahren zur Überprüfung von Hartholzoberflächen auf Risse, insbesondere Haarrisse, dadurch gekennzeichnet, daß auf der Holzoberfläche (10) ein langgestreckter, schmaler ersten Abschnitt (12) beleuchtet und ein parallel dazu im geringen Abstand (a) sich erstreckender, langgestreckter, schmaler zweiter Abschnitt (13) auf Licht überwacht wird und daß die beiden Abschnitte (12, 13) in räumlich starrer Zuordnung quer zu ihrer Erstreckungsrichtung über die Holzoberfläche (10) hinweggeführt werden und das Erfassen von Licht im zweiten Abschnitt (13) als Vorhandensein von Rissen gewertet wird.

2. Verfahren nach Anspruch 1, dadurch gekennzeichnet, daß die Holzoberfläche (10) so ausgerichtet wird, daß die langgestreckten beiden Abschnitte (12, 13) quer zur Hauptmaserung in der Holzoberfläche (10) verlaufen.

3. Verfahren nach Anspruch 1 oder 2, dadurch gekennzeichnet, daß die Holzoberfläche (10) relativ zur räumlich festen Anordnung der beiden Abschnitte (12, 13), vorzugsweise kontinuierlich, verschoben wird.

4. Verfahren nach einem der Ansprüche 1 bis 3, dadurch gekennzeichnet, daß der Abstand (a) zwischen den beiden Abschnitten (12, 13) minimal so festgelegt wird, daß bei ungestörter Holzoberfläche (10) kein Licht des beleuchteten ersten Abschnitts (12) in den zweiten Abschnitt (13) fällt.

5. Verfahren nach einem der Ansprüche 1 bis 4, dadurch gekennzeichnet, daß der erste Abschnitt (12) durch die Projektion eines Lichtstrichs (14) auf die Holzoberfläche (10) erzeugt wird.

6. Verfahren nach einem der Ansprüche 1 bis 5, dadurch gekennzeichnet, daß der zweite Abschnitt (13) von dem Empfangsfeld (15) eines lichtempfindlichen Zeilendetektors gebildet wird.

7. Verfahren nach Anspruch 6, dadurch gekennzeichnet, daß das Empfangsfeld (15) in eine Mehrzahl von nebeneinanderliegenden Empfangszellen unterteilt wird und selektiv jede Empfangszelle auf Licht überwacht wird.

8. Verfahren nach einem der Ansprüche 1 bis 7, dadurch gekennzeichnet, daß die Zeitdauer der Lichtdetektion zur Bewertung der Rißlänge herangezogen wird.

9. Vorrichtung zur Durchführung des Verfahrens nach einem der Ansprüche 1 bis 8, gekennzeichnet durch ein Transportband (16) zum Transport von Hartholzprüflingen (11), durch eine Laserlichtquelle (17), die einen quer zur Transportrichtung (20) sich erstreckenden Laserstrich (14) auf das Transportband (16) projiziert, durch eine vorzugsweise hochauflösende Zeilenkamera (18), die ein dem Empfangsfeld (15) entsprechendes Aufnahmefeld auf dem Transportband (16) aufspannt, und durch eine an die Zeilenkamera (18) angeschlossene Bildverarbeitungseinheit (19).

10. Vorrichtung nach Anspruch 9, dadurch gekennzeichnet, daß die Laserlichtquelle (17) einen gebündelten Laserstrahl erzeugt, der mittels einer Zylinderlinse oder eines Kollimators (21) in der quer zur Transportrichtung (20) des Transportbands (16) sich erstreckenden Ebene aufgeweitet ist.

11. Vorrichtung nach Anspruch 9 oder 10, dadurch gekennzeichnet, daß dem Transportband (16) ein Weggeber (22) zugeordnet ist, dessen Ausgang an der Bildverarbeitungeinheit (19) angeschlossen ist.
